# EUROPÄISCHE PATENTANMELDUNG

(11) **EP 3 447 174 A1**
(43) Veröffentlichungstag der Anmeldung: **27.02.2019**
(21) Anmeldenummer: 18184604.9
(22) Anmeldetag: 20.07.2018
(51) Int. Cl.: D01G 15/32, E06B 3/00, F16P 3/08

(54) **MASCHINENVERKLEIDUNG**

(30) Priorität: 22.08.2017 CH 10442017
(71) Anmelder: Maschinenfabrik Rieter AG, 8406 Winterthur (CH)
(72) Erfinder: BERNHARDSGRÜTTER, Fabio, 8404 Winterthur (CH)

(57) **Zusammenfassung**

Die vorliegende Erfindung betrifft eine Maschinenverkleidung für eine Textilmaschine mit einem Maschinenrahmen (1) und seitlichen Abdeckungen, wobei zumindest eine der seitlichen Abdeckungen eine Tür (2) mit zumindest zwei Flügeln (3, 4) aufweist. Der erste Flügel (3) der Tür (2) ist einseitig in ersten Scharnieren (5) am Maschinenrahmen (1) drehbar und ortsfest gehalten. Der zweite Flügel (4) ist einseitig in zweiten Scharnieren (6) an einer den ersten Scharnieren (5) gegenüberliegenden Seite des ersten Flügels (3) gehalten. Der zweite Flügel (4) ist über ein parallel zum ersten Flügel (3) angeordnetes Gestänge (7) und eine Kurbelschwinge (8) mit einem ortsfest am Maschinenrahmen (1) gehaltenen Drehpunkt (9) verbunden.

## Beschreibung

Die vorliegende Erfindung betrifft eine Maschinenverkleidung für eine Textilmaschine mit einem Maschinenrahmen und seitlichen Abdeckungen.

Aus der DE 102 42 929 A1 ist eine Maschinenverkleidung bekannt, bei welcher Verkleidungselemente horizontal verschieblich oder um eine horizontale Achse klappbar angeordnet sind. Weiter ist es aus der EP 2 551 387 A1 bekannt die seitliche Verkleidung einer Textilmaschine mit Schiebetüren zu versehen, wobei die Führungen der einzelnen Elemente der Schiebetüren derart angeordnet sind, dass die einzelnen Elemente übereinander gestapelt werden können. Dadurch wird eine grössere Zugangsöffnung zur Maschine erreicht. Nachteilig an den vorgeschlagenen Lösungen ist, dass jeweils horizontale Führungen oder zumindest horizontal über die Länge der Verkleidung angeordnete Achsen notwendig sind um die Seitenteile der Verkleidung zu führen oder aufzuhängen.

Aufgabe der vorliegenden Erfindung ist es somit, eine Maschinenverkleidung zu schaffen, welche zumindest eine vollständige seitliche Öffnung ermöglicht, ohne dass störende Aufhängungen oder Führungen über die Länge der Öffnungen notwendig sind.

Die Aufgabe wird gelöst durch eine Maschinenverkleidung mit den Merkmalen des unabhängigen Patentanspruchs.

Vorgeschlagen wird Maschinenverkleidung für eine Textilmaschine mit einem Maschinenrahmen und seitlichen Abdeckungen, wobei zumindest eine der seitlichen Abdeckungen eine Tür mit zumindest zwei Flügeln aufweist. Bei der Textilmaschine kann es sich dabei beispielsweise um eine Karde, eine Krempel oder einen Reiniger handeln. Der erste Flügel der Tür ist einseitig in ersten Scharnieren am Maschinenrahmen drehbar und ortsfest gehalten. Der zweite Flügel ist einseitig in zweiten Scharnieren an einer den ersten Scharnieren gegenüberliegenden Seite des ersten Flügels gehalten und über ein parallel zum ersten Flügel angeordnetes Gestänge und eine Kurbelschwinge mit einem ortsfest am Maschinenrahmen gehaltenen Drehpunkt verbunden.

Durch diese Anordnung der Flügel ist die gesamte Tür nur über die ersten Scharniere am Maschinenrahmen gehalten. Es sind keine weiteren Führungen oder Drehachsen für die Türe oder einzelne Flügel der Türe notwendig. Dabei können diese ersten Scharniere am Maschinenrahmen in einer beliebigen Achse angeordnet werden. Bevorzugterweise sind die ersten Scharniere in einer vertikalen Achse am Maschinenrahmen angebracht, sodass sich eine horizontale Bewegung der Türe und damit auch deren Flügel ergeben. Vorzugsweise sind zwei oder mehr erste Scharniere vorgesehen. Es hat sich gezeigt, dass durch die Anordnung von drei Scharnieren in der vertikalen Achse (Oben, Mitte, Unten) eine gute Stabilität der Tür bei deren Bewegung ergibt. Durch die Verbindung der beiden Flügel mit den zweiten Scharnieren wird der zweite Flügel frei tragend vom ersten Flügel gehalten. Auch für die zweiten Scharniere ist eine Anzahl von zwei oder mehr Scharnieren bevorzugt und vorteilhafterweise eine Anordnung von drei Scharnieren vorzusehen. Über das Gestänge und die Kurbelschwinge mit einem ortsfesten Drehpunkt am Maschinenrahmen ergibt sich eine Bewegung des zweiten Flügels ohne dass dieser in ortsfesten Schienen geführt werden muss.

Weiter wird vorgeschlagen, dass die Kurbelschwinge mit dem ersten Flügel und dem zweiten Flügel und dem Gestänge über einen Träger verbunden ist, sodass sich bei einer Drehbewegung des ersten Flügels eine gegenläufige Drehbewegung des zweiten Flügels ergibt. Durch die gegenläufige Bewegung des zweiten Flügels wird dieser bei einer Schwenkbewegung des ersten Flügels mitgenommen und gegen den ersten Flügel bewegt. Vorteilhafterweise ist bei einer Anordnung von drei zweiten Scharnieren das mittlere Scharnier in den Träger integriert.

Die Kurbelschwinge ist durch Kurbelschwingenbolzen drehbar mit dem Gestänge und dem zweiten Flügel verbunden. Die Verbindungen der Flügel und des Gestänges mit dem Träger sind durch ortsfest drehbar gehaltene Trägerbolzen vorgesehen. Weiter weist der Träger Schlitze zur Führung der Kurbelschwingenbolzen auf. Die Schlitze sind dabei in einer derart geschwungenen Form ausgeführt, dass sich die Position des einen Kurbelschwingenbolzens abhängig von der Bewegung des anderen Kurbelschwingenbolzens verändert. Eine Bewegung des ersten Flügels bewirkt nun eine Veränderung der Position des Gestänges welches jedoch am Maschinenrahmen ortsfest gehalten ist, was dazu führt, dass der Kurbelschwingenbolzen des Gestänges seine Position im Schlitz, in welchem der Kurbelschwingenbolzen geführt ist, verändert. Diese Positionsänderung wirkt sich durch die Kurbelschwinge auf den mit dem zweiten Flügel verbundenen Kurbelschwingenbolzen aus, worauf dieser ebenfalls seine Position im zugeordneten Schlitz verändert. Dies führt nun dazu, dass der mit der Kurbelschwinge drehbar verbundene zweite Flügel eine entsprechende Drehbewegung ausführt. Dabei ist die Kurbelschwinge derart ausgelegt, dass bei einer Drehbewegung des ersten Flügels um 85 bis 90 Winkelgrade der zweite Flügel ebenfalls eine Drehbewegung um 85 bis 90 Winkelgrade ausführt und anschliessend an die Drehbewegung in einer maximalen Offenstellung der Tür parallel oder nahezu parallel neben dem ersten Flügel angeordnet ist. Bedingt durch eine gewählte technische Lösung für die Konstruktion der Flügel, beispielsweise mit einem Rahmen und einem im Rahmen gehaltenen Türblatt, kann eine mögliche Öffnung der Tür auf weniger als 90 Winkelgrade beschränkt sein, beispielsweise 85 oder 89 Winkelgrade. In diesem Sinne ist der Begriff "parallel oder nahezu parallel" auch bei einer Drehbewegung um 85 oder 89 Winkelgrade als zutreffend zu betrachten.

Vorteilhafterweise ist der zweite Flügel am ersten Flügel in der maximalen Offenstellung der Tür durch einen Magneten gehalten. Sobald durch die vorbeschriebene Drehbewegung der Flügel die maximale Offenstellung der Tür erreicht wird, wird der zweite Flügel am ersten Flügel durch einen Magneten festgehalten. Der Magnet ist jedoch nur so stark ausgeführt, dass durch ein einfaches manuelles Ziehen die Magnetkraft überwunden werden kann wenn die Türe wieder geschlossen werden soll.

Bevorzugterweise ist der ortsfest am Maschinenrahmen angeordnete Drehpunkt des Gestänges mit einer lösbaren Verriegelung versehen ist. Damit kann durch Lösen dieser Verriegelung das Gestänge vom Maschinenrahmen entkoppelt werden und in der Folge die Tür weiter aufgeschwenkt werden. Dabei werden der erste und der parallel oder nahezu parallel zum ersten Flügel angeordnete zweite Flügel gemeinsam über die ersten Scharniere in einer gleichgerichteten Drehbewegung geöffnet. Dadurch gelingt es, die gesamte Öffnung der beiden Flügel frei zu geben und gleichzeitig die beiden Flügel aus dem Arbeitsbereich weg zu schwenken ohne dass die Tür vom Maschinenrahmen entfernt werden muss.

Vorteilhafterweise ist die Tür mit einer Schliessvorrichtung in der geschlossenen Stellung gehalten. Die Schliessvorrichtung dient dabei der Sicherheit beim Betrieb der Maschine und ist bevorzugterweise mit einem Schalter versehen, welcher bei Öffnung der Türe ein Abschalten der Maschine herbeiführt. Die Schliessvorrichtung kann mechanisch (beispielsweise einen Riegel oder einen Magneten) oder elektrisch vorgesehen werden.

Weiter wird eine Karde vorgeschlagen mit einer Maschinenverkleidung mit einer seitlichen Abdeckung welche aus einer Tür zumindest zwei Flügeln wie vor beschrieben besteht.

Weitere Vorteile der Erfindung sind in den nachfolgenden Ausführungsbeispielen beschrieben. Es zeigen:
- **Figur 1**: eine schematische Ansicht einer Ausführungsform einer seitlichen Verkleidung,
- **Figur 2**: eine schematische Darstellung eines Schnittes an der Stelle A-A nach der Figur 1 bei geschlossener Tür,
- **Figur 3**: eine schematische Darstellung eines Teils des Schnittes an der Stelle A-A nach der Figur 1 bei halb geöffneter Tür,
- **Figur 4**: eine schematische Darstellung des Schnittes an der Stelle A-A nach der Figur 1 bei geöffneter Tür,
- **Figur 5**: eine schematische Darstellung des Schnittes an der Stelle A-A nach der Figur 1 bei geöffneter und verschwenkter Tür und
- **Figur 6**: eine schematische Ansicht einer Karde mit einer seitlichen Verkleidung.

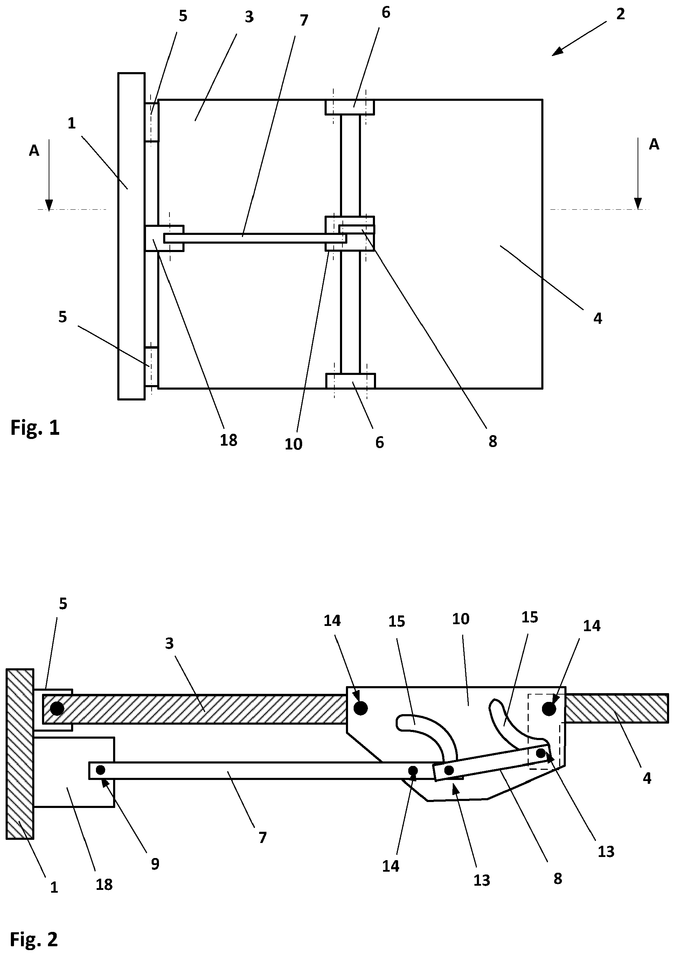

Figur 1 zeigt eine schematische Ansicht einer Ausführungsform einer seitlichen Verkleidung mit einer Tür 2 und Figur 2 zeigt eine schematische Darstellung eines Schnittes an der Stelle A-A nach der Figur 1 bei geschlossener Tür 2. Die Tür 2 besteht aus einem ersten Flügel 3 und einem zweiten Flügel 4. Dabei ist der erste Flügel 3 der Tür 2 über erste Scharniere 5 am Maschinenrahmen 1 drehbar befestigt. Es sind in der gezeigten Ausführungsform zwei in einer vertikalen Achse angeordnete erste Scharniere 5 gezeigt. Der zweite Flügel 4 ist über zweite Scharniere 6 am ersten Flügel 3 gehalten. Hier sind ebenfalls zwei zweite Scharniere 6 vorgesehen. Die Scharniere 6 weisen zwei Drehachsen auf.

Der erste Flügel 3 und der zweite Flügel 4 sind über einen Träger 10 miteinander verbunden, wobei die beiden Flügle 3 und 4 im Träger 10 über die Trägerbolzen 14 jeweils drehbar gehalten sind. Der Träger 10 ist über eine weiteren Trägerbolzen 14 drehbar mit einem Gestänge 7 verbunden. Das andere Ende des Gestänges 7 ist in einem Drehpunkt 9 in einer Befestigung 18 am Maschinenrahmen 1 befestigt. Durch das Gestänge 7 in Verbindung mit dem Träger 10 und der Kurbelschwinge 8 ist somit auch der zweite Flügel 4 über die Befestigung 18 mit dem Maschinenrahmen 1 verbunden. Weiter sind im Träger 10 zwei gebogene Schlitze 15 vorgesehen. Diese dienen einer Kurbelschwinge 8 als Führungen. Die Kurbelschwinge 8 ist an ihren beiden Enden mit Kurbelschwingenbolzen 13 versehen, welche in die beiden Schlitze 15 eingreifen. Dabei sind der eine Kurbelschwingenbolzen 13 mit dem zweiten Flügel 4 und der andere Kurbelschwingenbolzen 13 mit dem Gestänge 7 drehbar verbunden.

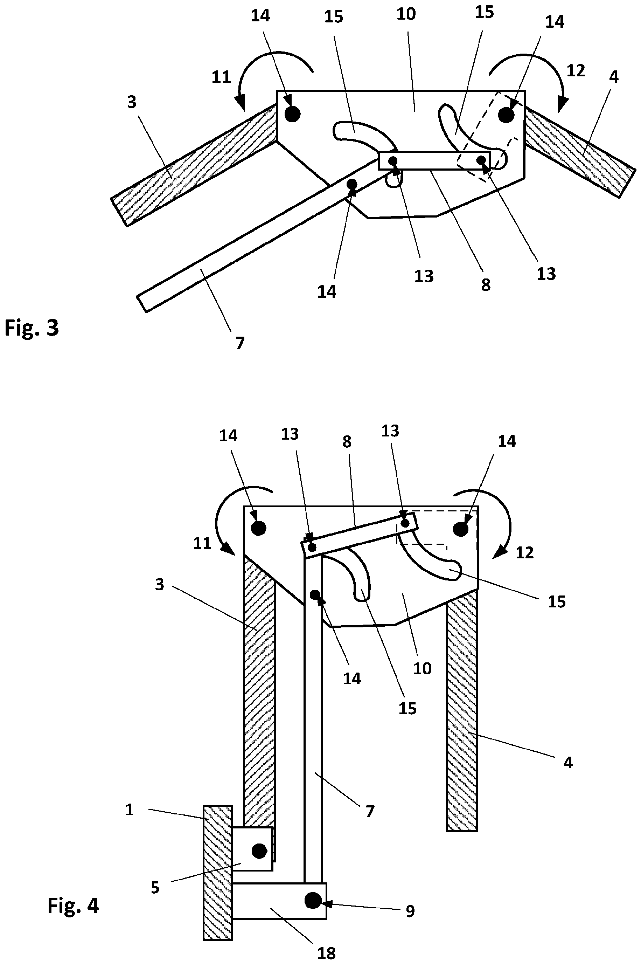

Figur 3 zeigt eine schematische Darstellung eines Teils des Schnittes an der Stelle A-A nach der Figur 1 bei halb geöffneter Tür 2. Bei einer Drehbewegung des ersten Flügels 3 um die ersten Scharniere 5 (nicht gezeigt) erfolgt ebenfalls eine Drehbewegung 11 um den Trägerbolzen 14 über den der ersten Flügel 3 mit dem Träger 10 verbunden ist. Dies wird dadurch bewirkt, dass das Gestänge 7 über die Befestigung 18 mit dem Maschinenrahmen 1 verbunden ist und damit einen festen Abstand zwischen dem Drehpunkt am Maschinenrahmen und dem Trägerbolzen 14 mit welchem das Gestänge 7 mit dem Träger 10 verbunden ist. Die Drehbewegung 11 des ersten Flügels 3 führt über das Gestänge 7 und die Verbindung über die Trägerbolzen 14 mit dem Träger 10 dazu, dass die Kurbelschwinge 8 im Schlitz 15 über die Kurbelschwingenbolzen 13 ihre Position verändert. Die Positionsveränderung der Kurbelschwinge 8 in den Schlitzen 15 bewirkt durch die Verbindung über den Kurbelschwingenbolzen 13 mit dem zweiten Flügel 4 eine Drehbewegung 12 des zweiten Flügels um den Trägerbolzen 14 mit welchem der zweite Flügel 4 mit dem Träger 10 verbunden ist. Dabei sind die Drehbewegungen 11 des ersten Flügels 3 und die Drehbewegung 12 des zweiten Flügels 4 entgegen gerichtet. Eine Weiterführung dieser Bewegungen führt zu einer Stellung der beiden Flügel 3 und 4 wie in Figur 4 dargestellt.

Figur 4 zeigt eine schematische Darstellung des Schnittes an der Stelle A-A nach der Figur 1 bei geöffneter Tür 2. Gleiche Bauteile wie in den Figuren 1 bis 3 sind mit denselben Bezugszeichen versehen. Der Erste Flügel 4 ist um die ersten Scharniere 5 gegenüber dem Maschinenrahmen 1 im Vergleich zu Figur 2 um 90 Winkelgrade gedreht, was eine Drehbewegung 11 um den Trägerbolzen 14 ebenfalls um 90 Winkelgrade zur Folge hat. Durch die Verbindungen des Trägers 10, respektive der Kurbelschwinge 8, mit dem Maschinenrahmen 1 über das Gestänges 7 einerseits und mit dem zweiten Flügel 4 über die Kurbelschwinge 8 andrerseits wurde in der Folge der zweite Flügel 4 um dessen Trägerbolzen ebenfalls um 90 Winkelgrade mit einer Drehbewegung 12 geschwenkt. Die Kurbelschwinge 8 hat dabei durch die Führung der Kurbelschwingenbolzen 13 in den Schlitzen 15 im Träger 10 ihre Endposition erreicht. Der erste Flügel 3 ist dadurch parallel zum zweiten Flügel 4 angeordnet.

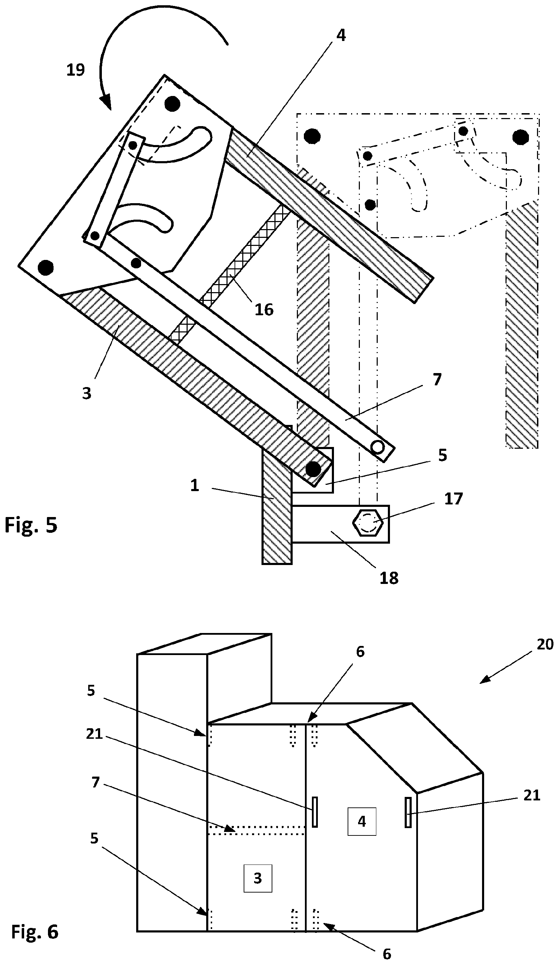

Figur 5 zeigt eine schematische Darstellung des Schnittes an der Stelle A-A nach der Figur 1 bei geöffneter und verschwenkter Tür 2. Bei vollständig geöffneter Tür sind die beiden Flügel 3 und 4 parallel zueinander angeordnet und werden über einen Magneten 16 zusammengehalten. Das Gestänge 7 ist in der Befestigung 18 am Maschinenrahmen 1 mit einer lösbaren Verriegelung 17 versehen. Nach lösen der Verriegelung 17 ist das Gestänge 7 nicht mehr mit dem Maschinenrahmen 1 verbunden und die beiden Flügel 3 und 4 können um die ersten Scharniere 5 gemeinsam mit einer Drehbewegung 19 geschwenkt werden. Dadurch wird erreicht, dass die gesamte Tür aus dem Arbeitsbereich weg geschwenkt werden kann.

Figur 6 zeigt eine schematische Ansicht einer Karde 20 mit einer seitlichen Verkleidung. Die seitliche Verkleidung ist mit einer Tür mit zwei Flügeln 3 und 4 versehen. Die Tür weist zwei Türgriffe 21 auf, welche im gezeigten Ausführungsbeispiel am zweiten Flügel 4 angeordnet sind. Durch Ziehen an den Türgriffen 21 wird der zweite Flügel 4 um die zweiten Scharniere 6 und um den Träger 10 (nicht gezeigt) aufgeschwenkt. Durch die Kopplung mit dem ersten Flügel 3 über die Kurbelschwinge 8 und das Gestänge 7 erfolgt gleichzeitig ein Verschwenken des ersten Flügels 3 um die ersten Scharniere 5.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Maschinenrahmen
- 2: Tür
- 3: Erster Flügel
- 4: Zweiter Flügel
- 5: Erste Scharniere
- 6: Zweite Scharniere
- 7: Gestänge
- 8: Kurbelschwinge
- 9: Drehpunkt
- 10: Träger
- 11: Drehbewegung erster Flügel
- 12: Drehbewegung zweiter Flügel
- 13: Kurbelschwingenbolzen
- 14: Trägerbolzen
- 15: Schlitze
- 16: Magnet
- 17: Verriegelung
- 18: Befestigung
- 19: Drehbewegung Tür
- 20: Karde
- 21: Türgriff

## Patentansprüche

1. Maschinenverkleidung für eine Textilmaschine mit einem Maschinenrahmen (1) und seitlichen Abdeckungen, wobei zumindest eine der seitlichen Abdeckungen eine Tür (2) mit zumindest zwei Flügeln (3, 4) aufweist, **dadurch gekennzeichnet, dass** der erste Flügel (3) der Tür (2) einseitig in ersten Scharnieren (5) am Maschinenrahmen (1) drehbar und ortsfest gehalten ist, und dass der zweite Flügel (4) einseitig in zweiten Scharnieren (6) an einer den ersten Scharnieren (5) gegenüberliegenden Seite des ersten Flügels (3) gehalten ist, wobei der zweite Flügel (4) über ein parallel zum ersten Flügel (3) angeordnetes Gestänge (7) und eine Kurbelschwinge (8) mit einem ortsfest am Maschinenrahmen (1) gehaltenen Drehpunkt (9) verbunden ist.

2. Maschinenverkleidung nach Anspruch 1, **dadurch gekennzeichnet, dass** die Kurbelschwinge (8) mit dem ersten Flügel (3) und dem zweiten Flügel (4) und dem Gestänge (7) über einen Träger (10) verbunden ist, sodass sich bei einer Drehbewegung (11) des ersten Flügels (3) eine gegenläufige Drehbewegung (12) des zweiten Flügels (4) ergibt.

3. Maschinenverkleidung nach Anspruch 1 oder 2, **dadurch gekennzeichnet, dass** die Kurbelschwinge (8) durch Kurbelschwingenbolzen (13) drehbar mit dem Gestänge (7) und dem zweiten Flügel (4) verbunden ist.

4. Maschinenverkleidung nach Anspruch 3, **dadurch gekennzeichnet, dass** die Verbindungen der Flügel (3, 4) und des Gestänges (7) mit dem Träger (10) durch ortsfest drehbar gehaltene Trägerbolzen (14) vorgesehen ist und der Träger (7) Schlitze (15) zur Führung der Kurbelschwingenbolzen (13) aufweist.

5. Maschinenverkleidung nach einem der vorherigen Ansprüche, **dadurch gekennzeichnet, dass** die Kurbelschwinge (8) derart ausgelegt ist, dass bei einer Drehbewegung (11) des ersten Flügels (3) um 85 bis 90 Winkelgrade der zweite Flügel (4) ebenfalls eine Drehbewegung (12) um 85 bis 90 Winkelgrade ausführt und anschliessend in einer maximalen Offenstellung der Tür (2) parallel oder nahezu parallel neben dem ersten Flügel (3) angeordnet ist.

6. Maschinenverkleidung nach Anspruch 5, **dadurch gekennzeichnet, dass** der zweite Flügel (4) am ersten Flügel (3) in der maximalen Offenstellung der Tür (2) durch ein Magnet (16) gehalten ist.

7. Maschinenverkleidung nach einem der vorherigen Ansprüche, **dadurch gekennzeichnet, dass** der ortsfest am Maschinenrahmen (1) angeordnete Drehpunkt (9) mit einer lösbaren Verriegelung (17) versehen ist.

8. Maschinenverkleidung nach Anspruch 7, **dadurch gekennzeichnet, dass** nach Lösen der Verriegelung (17) eine gleichgerichtete Drehbewegung (19) beider Flügel (3, 4) vorgesehen ist.

9. Maschinenverkleidung nach einem der vorherigen Ansprüche, **dadurch gekennzeichnet, dass** die Tür (1) mit einer Schliessvorrichtung in der geschlossenen Stellung gehalten ist.

10. Karde (20) mit einer Maschinenverkleidung mit einem Maschinenrahmen (1) und seitlichen Abdeckungen, **dadurch gekennzeichnet, dass** zumindest eine der seitlichen Abdeckungen nach einem der vorherigen Ansprüche vorgesehen ist.
